# EUROPÄISCHE PATENTSCHRIFT

(11) **EP 2 976 230 B1**
(45) Veröffentlichungstag und Bekanntmachung des Hinweises auf die Patenterteilung: **15.05.2019**
(21) Anmeldenummer: 14711971.3
(22) Anmeldetag: 21.03.2014
(51) Int. Cl.: B60K 17/10, B60K 17/356, B60K 23/08, F16H 61/444, F16H 61/448, B60K 7/00

(54) **FAHRZEUG MIT EINEM ZUSATZANTRIEBSKREISLAUF**
VEHICLE HAVING AN ADDITIONAL DRIVE CIRCUIT
VÉHICULE ÉQUIPÉ D'UN CIRCUIT D'ENTRAÎNEMENT SUPPLÉMENTAIRE

(30) Priorität: 22.03.2013 DE 102013205121
(43) Veröffentlichungstag der Anmeldung: 27.01.2016
(73) Patentinhaber: Max Holder GmbH, 72555 Metzingen (DE)
(72) Erfinder: BRAUN, Fritz, 72127 Kusterdingen (DE); MAYER, Christian, 72768 Reutlingen (DE)
(74) Vertreter: Kohler Schmid Möbus Patentanwälte
(86) Internationale Anmeldenummer: PCT/EP2014/055672
(87) Internationale Veröffentlichungsnummer: WO 2014/147212

(56) Entgegenhaltungen:
- EP-A1- 0 653 324
- DE-A1- 3 216 821
- DE-A1- 19 539 043

## Beschreibung

Die Erfindung betrifft ein Fahrzeug, insbesondere Nutzfahrzeug, umfassend mindestens eine angetriebene Achse, eine Hydraulikpumpe eines ersten Antriebskreislaufs und mindestens einen in dem ersten Antriebskreislauf angeordneten und von diesem gespeisten Motor, der ein zugeordnetes Rad oder eine zugeordnete Achse antreibt, wobei ein Zusatzantriebskreislauf mit zugeordneter weiterer Hydraulikpumpe zur zusätzlichen Speisung des zumindest einen Motors vorgesehen ist, und eine zweite antreibbare Achse mit zugeordnetem zweitem Antriebskreislauf vorgesehen ist, wobei im zweiten Antriebskreislauf zumindest ein von diesem speisbarer Motor angeordnet ist und wahlweise der zweite Antriebskreislauf oder der Zusatzkreislauf über eine Umschaltvorrichtung mit der weiteren Hydraulikpumpe verbindbar ist.

Ein derartiges Fahrzeug ist beispielsweise aus der DE 32 16 821 A1 bekannt.

Aus der EP 0 653 324 A1 ist ein Verfahren zum hydrostatischen Antreiben eines Fahrzeugs bekannt, bei dem Hydromotoren über Übersetzungsgetriebe Räder antreiben.

Aus der DE 195 39 043 A1 ist ein hydrostatisch angetriebenes Fahrzeug bekannt, bei dem mittels eines mechanischen Verbindungselements zwei durch jeweils einen Radmotor angetriebene Räder gekoppelt werden können.

Bei diesen Fahrzeugen handelt es sich vorwiegend um Forst-, landwirtschaftliche, Baufahrzeuge oder Kommunalfahrzeuge, die zum einen optimale Fahrleistung in schwierigem Gelände bieten sollen und zum anderen auf normalen Straßen zur zügigen Fortbewegung dienen sollen. Darüber hinaus sollen diese Fahrzeuge möglichst effizient arbeiten.

Aufgabe der vorliegenden Erfindung ist es daher, ein Fahrzeug derart weiterzubilden, dass es die oben genannten Anforderungen erfüllt.

Gelöst wird diese Aufgabe erfindungsgemäß durch ein Fahrzeug, umfassend mindestens eine angetriebene Achse, eine Hydraulikpumpe eines ersten Antriebskreislaufs und mindestens einen in dem ersten Antriebskreislauf angeordneten und von diesem gespeisten Motor, der ein zugeordnetes Rad oder eine zugeordnete Achse antreibt, wobei ein Zusatzantriebskreislauf mit zugeordneter weiterer Hydraulikpumpe zur zusätzlichen Speisung des zumindest einen Motors vorgesehen ist. Es ist eine zweite antreibbare Achse mit zugeordnetem zweitem Antriebskreislauf vorgesehen, wobei im zweiten Antriebskreislauf zumindest ein von diesem speisbarer Motor angeordnet ist und wahlweise der zweite Antriebskreislauf oder Zusatzkreislauf über eine Umschaltung mit der weiteren Hydraulikpumpe verbindbar ist, wobei der zumindest eine in dem ersten Antriebskreislauf angeordnete und von diesem gespeiste Motor als Radmotor ausgebildet ist. Dabei kann für den Zusatzantriebskreislauf eine separate Hydraulikpumpe vorgesehen sein. Es ist jedoch auch denkbar, dass lediglich eine Zweikreispumpe vorgesehen ist, die zwei Hydraulikpumpen vereint und beispielsweise als Axialkolbenpumpe ausgebildet ist. Wenn der Radmotor des ersten Antriebskreislaufs zusätzlich durch den Zusatzantriebskreislauf und somit von zwei Hydraulikpumpen gespeist wird, muss der Radmotor (antreibende Hydraulikmotor) mit höherem Druck betrieben werden, da die Fahrleistung nun von einer treibenden Achse geleistet werden muss.

Es erhöht sich somit die Differenz zwischen Niederdruckbereich und Hochdruckbereich im Radmotor, was zu einem besseren Wirkungsgrad des Gesamtsystems führt. Insbesondere kann durch den Zusatzantriebskreislauf das Fördervolumen verdoppelt werden. Eine maximale Geschwindigkeit des Fahrzeugs kann nun mit verringerter Drehzahl der Hydraulikpumpen realisiert werden. Dadurch sinkt der Kraftstoffverbrauch, wenn als Motor ein Verbrennungsmotor verwendet wird.

Die zweite antreibbare Achse kann wahlweise zu- oder abgeschaltet werden. Vorzugsweise ist die hintere Achse des Fahrzeugs zu- oder abschaltbar. Ist sie zugeschaltet, kann das Fahrzeug mit Allradantrieb betrieben werden. Wird sie abgeschaltet, kann das Fahrzeug mit höherer Geschwindigkeit bei geringerer Drehzahl der Pumpen betrieben werden, da die der hinteren Achse bzw. dem zweiten Antriebskreislauf zugeordnete Hydraulikpumpe nun dem Zusatzkreislauf und damit der vorderen Achse zugeschaltet ist.

Besonders einfach kann die Umschaltung erfolgen, wenn die Umschaltvorrichtung zwei Umschaltventile aufweist. Durch Schalten der Umschaltventile kann somit entweder der zweite Antriebskreislauf mit der weiteren Hydraulikpumpe verbunden werden oder der Zusatzantriebskreislauf. Das Umschalten kann während des Fahrens erfolgen.

Während es grundsätzlich möglich ist, zwei getrennte Hydraulikpumpen zu verwenden, ist es besonders vorteilhaft, wenn eine Zweikreispumpe, die zwei Pumpen vereint, vorgesehen ist, die mit dem ersten Antriebskreislauf oder wahlweise mit dem zweiten Antriebskreislauf und dem Zusatzantriebskreislauf verbunden ist.

Eine die Hydraulikpumpe(n) antreibende Leistungsquelle kann als Motor, insbesondere Verbrennungsmotor, z. B. Benzin-, Gas- oder Dieselmotor, ausgebildet sein. Grundsätzlich wäre jedoch auch ein Elektroantrieb oder ein Hybridantrieb als Leistungsquelle denkbar.

Gemäß einer Ausgestaltung der Erfindung können zumindest in einem der Antriebskreise mindestens zwei Radmotoren angeordnet sein, die parallel gespeist sind. Dabei können die beiden Antriebskreise (wenn der zweite Antriebskreislauf an die weitere Pumpe angeschlossen ist) ein gleich großes Fördervolumen haben. Dadurch wird gewährleistet, dass die achsweise angesteuerten Radmotoren immer gleichmäßig versorgt werden. Somit erhält man einen konstanten Allradantrieb. Derartig ausgestaltete Fahrzeuge sind besonders geeignet zum Einsatz im Weinbau, Obstbau und bei Schnee.

Wenn in einem Antriebskreis zwei Radmotoren angeordnet sind, kann die Achse ein mechanisches Verbindungselement zur mechanischen Kopplung der zwei jeweils durch einen Radmotor angetriebenen Räder und eine Kupplung aufweisen. Dadurch können die Räder miteinander gekoppelt werden und somit bei Schlupf in einem Rad, beispielsweise durch einen schlecht haftenden Untergrund, vermieden werden, dass es trotz angetriebener Räder der Achse nicht weiter bewegbar ist. Andererseits wird die Möglichkeit geschaffen, das Fahrzeug im Fahrbetrieb mit unterschiedlicher Drehzahl der angetriebenen Räder einer Achse möglichst boden- und reifenschonend zu bewegen.

Weitere Vorteile ergeben sich, wenn die Radmotoren als Radialkolbenmotoren ausgebildet sind. Dadurch besteht die Möglichkeit, auf die halbe Kolbenzahl umzuschalten und somit die maximale Geschwindigkeit des Fahrzeugs bei gleichbleibender Pumpendrehzahl zu erhöhen.

Besonders bevorzugt ist es, wenn die Radialkolbenmotoren jeweils ein Schluckvolumen > 280 cm³, beispielsweise 400 cm³, aufweisen. Dadurch erhöht sich die Zugkraft der Radmotoren im Vergleich zu den Motoren, die bislang verwendet wurden.

Weiterhin kann eine Speisedruckversorgung vorgesehen sein, die die Radmotoren der von der Pumpe getrennten Antriebsachse mit einem Speisedruck speist. Dadurch werden die Kolben der Radialkolbenmotoren zurückgedrückt, sodass sie nicht mehr am Laufring abrollen. Alternativ kann hierfür auch der Staudruck der Leckölleitung der Radmotoren verwendet werden. Daher entfallen die Reibverluste der Motoren, was eine Steigerung des gesamten Wirkungsgrades zur Folge hat.

Im Vergleich zum Stand der Technik können durch größere Radmotoren im Allradantrieb etwa 45 % mehr Zugkraft und Drehmoment bewirkt werden. Allerdings sinkt durch das größere Volumen der Radmotoren die maximale Geschwindigkeit bei gleichem Fördervolumen der Pumpe.

In den Rahmen der Erfindung fällt außerdem ein Verfahren zum Betrieb eines Fahrzeugs mit zwei hydraulisch antreibbaren Achsen, denen jeweils zumindest ein Radmotor zugeordnet ist, bei dem im Fall des Antriebs beider Achsen die Radmotoren mit einem vorgegebenen Fördervolumen betrieben werden und im Fall des Antriebs nur einer der Achsen der zumindest eine Radmotor der angetriebenen Achse mit dem doppelten Fördervolumen angetrieben wird, indem die Pumpe der nicht angetriebenen Achse der angetriebenen Achse zusätzlich zu der ohnehin schon zugeordneten Pumpe zugeschaltet wird. Dadurch kann die Maximalgeschwindigkeit des Fahrzeugs auf einfache Art und Weise erhöht werden. Weiterhin kann vorgesehen sein, dass eine die Radmotoren speisende Zweikreispumpe im Fall nur einer angetriebenen Achse mit geringerer Drehzahl betrieben wird als im Fall des Antriebs beider Achsen. Dadurch lässt sich der Wirkungsgrad des Fahrzeugs erhöhen.

Insbesondere ist erfindungsgemäß ein Fahrzeug vorgesehen, welches vier Radmotoren mit jeweils einem Schluckvolumen von 400 cm³ aufweist. Es ist eine Zweikreispumpe vorgesehen, die an die Antriebskreisläufe angeschlossen ist, wobei sie entweder einen Antriebskreislauf für jede Achse (mit jeweils einer von zwei in der Zweikreispumpe vereinten Pumpen) versorgt oder zwei Kreisläufe, die auf dieselbe Achse geschaltet sind (mit beiden in der Zweikreispumpe vereinten Pumpen). Wahlweise kann eine Achse, insbesondere die hintere Achse, zu- oder abgeschaltet werden. Der komplette Volumenstrom der Zweikreispumpe kann so auf eine Achse geleitet werden. Wenn jedoch beide Achsen angetrieben werden, ist ein konstanter Allradantrieb möglich. Für die schnelle Straßenfahrt ist die zweite Achse abschaltbar. Durch die großen Radmotoren wird eine große Zugkraft bewirkt. Es kann ein höherer Wirkungsgrad als im Stand der Technik erreicht werden. Die Zweikreispumpe kann für eine höhere Geschwindigkeit des Fahrzeugs sorgen, bei niedrigerer Drehzahl der Pumpe und des Verbrennungsmotors. Kraftstoff kann eingespart werden. Das Fahrzeug ist umweltfreundlicher und geräuschärmer als Fahrzeuge des Standes der Technik.

Die Zweikreispumpe kann ein Fördervolumen von 2 x 28 cm³ pro Umdrehung aufweisen und eine maximale Drehzahl von 3600 Umdrehungen pro Minute aufweisen. Sie kann angetrieben werden durch einen Verbrennungsmotor, insbesondere einen Dieselmotor, mit einer Drehzahl von 2700 Umdrehungen pro Minute. Schaltet man eine Achse ab und dafür den Zusatzantriebskreislauf auf die bereits angetriebene Achse, verdoppelt sich das Fördervolumen von 1 x 28 cm³ pro Umdrehung auf 1 x 56 cm³ (2x28cm³) pro Umdrehung der Pumpe auf die angetriebene Achse. Eine maximale Geschwindigkeit des Fahrzeugs kann mit verringerter Drehzahl der Pumpe von beispielsweise 2000 Umdrehungen pro Minute realisiert werden. Durch den höheren Wirkungsgrad, der durch die abgeschalteten Radmotoren und den höheren Differenzdruck entsteht, und durch die geringere Drehzahl sinkt der Kraftstoffverbrauch. Es ist also mit weniger Kraftstoff die gleiche Geschwindigkeit möglich. Erhöht man die Drehzahl der Pumpe auf 2500 Umdrehungen pro Minute, kann die maximale Geschwindigkeit beispielsweise von 40 km/h auf 50 km/h gesteigert werden. Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine schematische Seitenansicht eines erfindungsgemäßen Fahrzeugs;
- Fig. 2: ein hydraulisches Schaltschema des Fahrzeugs zur Verdeutlichung des Antriebs einer Achse mit zwei Antriebskreisläufen;
- Fig. 3: ein hydraulisches Schaltschema des Fahrzeugs zur Verdeutlichung des Antriebs zweier Achsen.

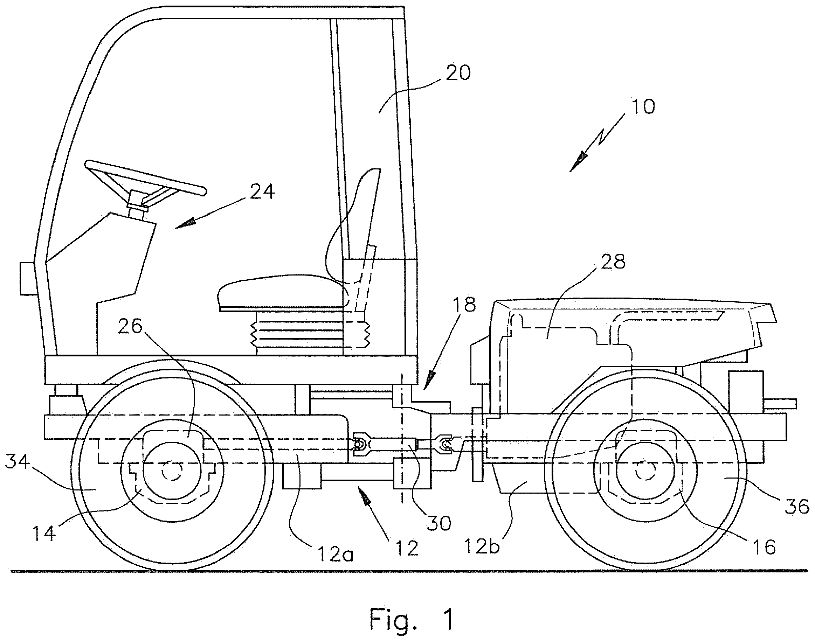

In der Fig. 1 ist ein Fahrzeug 10, welches beispielsweise als Kommunal- oder landwirtschaftliches oder Forstfahrzeug einzusetzen ist, gezeigt. Es umfasst einen Rahmen 12, welcher mit zwei Achsen 14 und 16 versehen und mittels einer Knicklenkung 18 lenkbar ist, wobei die Knicklenkung 18 ungefähr mittig zwischen den beiden Achsen 14 und 16 angeordnet ist und den Rahmen 12 in einen Rahmenteil 12a und einen Rahmenteil 12b unterteilt. Im Ausführungsbeispiel trägt das Rahmenteil 12a eine Fahrerkabine 20 und einen Bedienungsstand 24 mit den üblichen Armaturen. Weiterhin trägt im Ausführungsbeispiel der Rahmenteil 12a eine als Zweikreispumpe ausgebildete Hydraulikpumpe 26 zum hydraulischen, insbesondere hydrostatischen Antrieb des Fahrzeugs 10. Der Rahmenteil 12b trägt seinerseits einen Verbrennungsmotor 28, insbesondere einen Dieselmotor, welcher über eine Gelenkwelle 30 die Hydraulikpumpe 26 antreibt. Jede der Achsen 14 und 16 ist mit einem Satz Räder 34 bzw. 36 versehen.

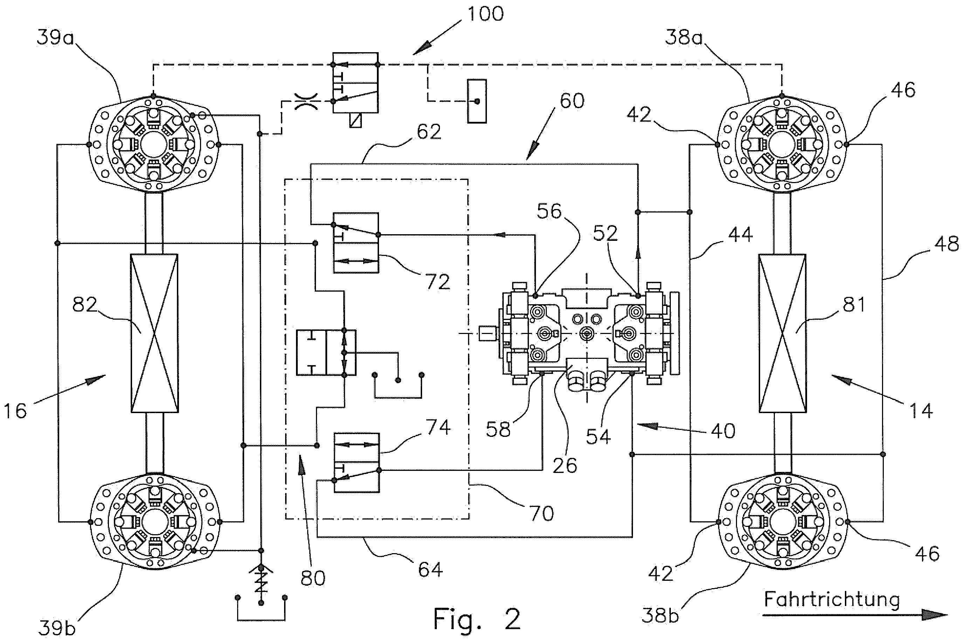

Im in der Fig. 2 gezeigten Zustand ist die Achse 14 angetrieben, die zwei Radmotoren 38a, 38b aufweist. Beide Radmotoren 38a, 38b sind in einem ersten hydraulischen Antriebskreislauf 40 parallelgeschaltet angeordnet. Dabei ist bei jedem der Radmotoren 38a und 38b ein erster Hochdruckanschluss 42 mit einer ersten Hochdruckleitung 44 des Antriebskreislaufs 40 verbunden und ein zweiter Hochdruckanschluss 46 mit einer zweiten Hochdruckleitung 48 des Antriebskreislaufs 40. Beide Hochdruckleitungen 44, 48 des Antriebskreislaufs 40 sind mit Hochdruckanschlüssen 52 und 54 der Hydraulikpumpe 26 verbunden, welche vorzugsweise als mengensteuerbare Axialkolbenpumpe ausgebildet und direkt von dem Verbrennungsmotor 28 angetrieben ist.

Die Radmotoren 38a, 38b sind weiterhin mit einem Zusatzantriebskreislauf 60 verbunden, wobei der Zusatzantriebskreislauf 60 eine erste Hochdruckleitung 62 und eine zweite Hochdruckleitung 64 aufweist. Der Zusatzantriebskreislauf 60 ist mit den Hochdruckanschlüssen 56, 58 an die Pumpe 26 angeschlossen. In der gezeigten Darstellung sind somit sowohl der erste Antriebskreislauf 40 als auch der Zusatzantriebskreislauf 60 mit den Radmotoren 38a, 38b verbunden.

Der Fig. 2 ist auch zu entnehmen, dass eine Umschaltvorrichtung 70 vorgesehen ist, die Umschaltventile 72, 74 aufweist. In der gezeigten Stellung ist der Zusatzantriebskreislauf 60 geschlossen. Die Radmotoren 39a, 39b der zweiten antreibbaren Achse 16 sind nicht an die Hydraulikpumpe 26 angeschlossen. Die Radmotoren 39a, 39b werden lediglich durch eine Speisedruckversorgung 80 mit einem Speisedruck versorgt, die dafür sorgt, dass die Kolben der Radmotoren 39a, 39b ganz zurückgedrückt werden und nicht mehr an einem Laufring abrollen. Dadurch werden Reibverluste der Radmotoren unterdrückt, sodass der Wirkungsgrad steigt.

Der Fig. 2 ist weiterhin zu entnehmen, dass beide antreibbaren Achsen 14, 16 ein mechanisches Verbindungselement 81, 82 aufweisen zur bedarfsweisen mechanischen Kopplung der Radmotoren 38a, 38b bzw. 39a, 39b. Mit Hilfe einer Geschwindigkeitsumschaltung 100 kann eine vorgegebene Anzahl der Kolben der Radmotoren 38a, 38b, 39a, 39b, insbesondere die Hälfte der Kolben, zu- bzw. abgeschaltet werden.

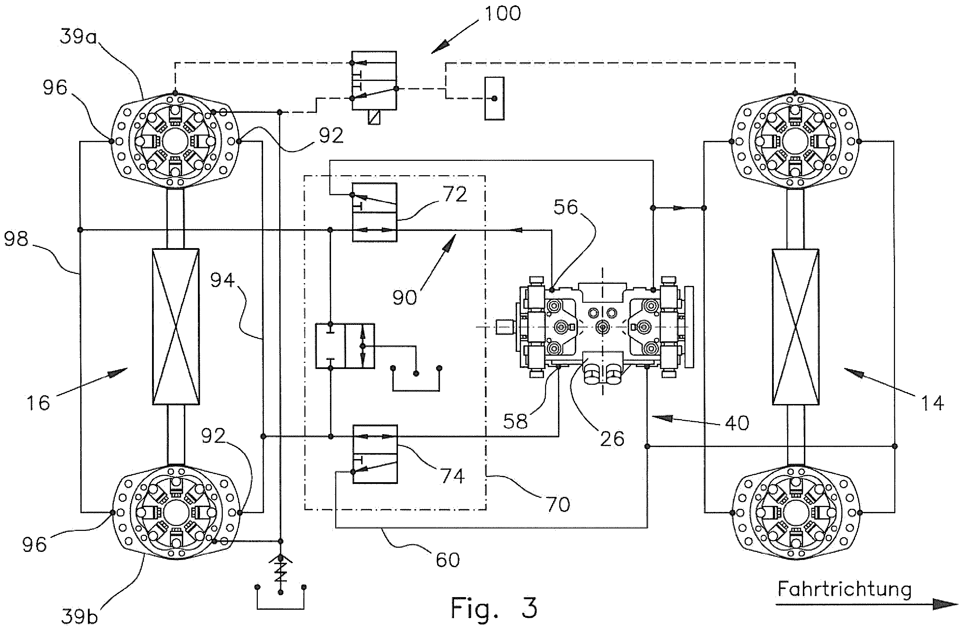

In der Fig. 3 ist die Situation gezeigt, in der die Umschaltventile 72, 74 der Umschaltvorrichtung 70 geschaltet wurden. Dies bedeutet, dass der Zusatzantriebskreislauf 60 unterbrochen wurde. Dafür wurde nun ein zweiter Antriebskreislauf 90 hergestellt, der an die Hochdruckanschlüsse 56, 58 der Pumpe 26 angeschlossen ist. Die Radmotoren 39a, 39b sind parallel in den zweiten Antriebskreislauf 90 eingebunden. Insbesondere ist die Hochdruckleitung 94 des Antriebskreislaufs 90 an die Hochdruckanschlüsse 92 und die Hochdruckleitung 98 an die Hochdruckanschlüsse 96 angeschlossen. Die Radmotoren 38a, 38b sind nur noch an den ersten Antriebskreislauf 40 angeschlossen. In diesem Fall wird ein Allradantrieb realisiert. Vorzugsweise sind die Radmotoren 38a, 38b, 39a, 39b identisch dimensioniert. Außerdem ist das Fördervolumen für beide Antriebskreise 40, 90 vorzugsweise identisch bei identischen Radgrößen der Räder, die an die Radmotoren 38a, 38b, 39a, 39b angeschlossen sind.

Wenn beide Achsen 14, 16 angetrieben sind, wird das Volumen der Radmotoren 38a, 38b, 39a, 39b vorzugsweise nicht voll ausgenutzt. Durch das große Volumen der Radmotoren ergibt sich jedoch ein großes Drehmoment. Die Radmotoren 38a bis 39b weisen zwei Teilmotoren auf, wobei ein Teilmotor abgeschaltet werden kann, sodass jeweils nur der andere Teilmotor angetrieben werden kann. Dadurch können höhere Geschwindigkeiten des Fahrzeugs 10 erreicht werden. Vorzugsweise entspricht die Achse 16 einer Hinterachse des Fahrzeugs, sodass die Hinterachse abschaltbar ist, indem die Umschaltvorrichtung 70 ein Umschalten vom Antriebskreislauf 90 auf den Zusatzkreislauf 60 bewirkt. Die Hydraulikpumpe 26 ist als Zweikreispumpe ausgebildet. Dies bedeutet, dass quasi zwei Pumpen vereint sind, aber von derselben Antriebswelle angetrieben werden. Die erste Pumpe versorgt die Hochdruckanschlüsse 52, 54 während der zweiten Pumpe die Hochdruckanschlüsse 56, 58 zugeordnet sind.

## Patentansprüche

1. Fahrzeug (10) umfassend mindestens eine angetriebene Achse (14), eine Hydraulikpumpe (26) eines ersten Antriebskreislaufs (40) und mindestens einen in dem ersten Antriebskreislauf (40) angeordneten und von diesem gespeisten Motor, der ein zugeordnetes Rad (36) oder eine zugeordnete Achse antreibt, wobei ein Zusatzantriebskreislauf (60) mit zugeordneter weiterer Hydraulikpumpe zur zusätzlichen Speisung des zumindest einen Motors vorgesehen ist, und eine zweite antreibbare Achse (16) mit zugeordnetem zweitem Antriebskreislauf (90) vorgesehen ist, wobei im zweiten Antriebskreislauf (90) zumindest ein von diesem speisbarer Motor angeordnet ist und wahlweise der zweite Antriebskreislauf (90) oder der Zusatzkreislauf (60) über eine Umschaltvorrichtung (70) mit der weiteren Hydraulikpumpe (26) verbindbar ist, **dadurch gekennzeichnet, dass** der zumindest eine in dem ersten Antriebskreislauf (40) angeordnete und von diesem gespeiste Motor als Radmotor (38a, 38b) ausgebildet ist.

2. Fahrzeug nach Anspruch 1, **dadurch gekennzeichnet, dass** die Umschaltvorrichtung (70) zwei Umschaltventile (72, 74) aufweist.

3. Fahrzeug nach einem der vorhergehenden Ansprüche, **dadurch gekennzeichnet, dass** eine Zweikreispumpe vorgesehen ist, die mit dem ersten Antriebskreislauf (40) und wahlweise mit dem zweiten Antriebskreislauf (90) oder Zusatzantriebskreislauf (60) verbunden ist.

4. Fahrzeug nach einem der vorhergehenden Ansprüche, **dadurch gekennzeichnet, dass** die die Hydraulikpumpe (26) antreibende Leistungsquelle als Motor, insbesondere als Verbrennungsmotor (28), ausgebildet ist.

5. Fahrzeug nach einem der vorhergehenden Ansprüche, **dadurch gekennzeichnet, dass** zumindest in einem der
Antriebskreise (40, 90) mindestens zwei
Radmotoren (38a, 38b, 39a, 39b) angeordnet sind, die parallel gespeist sind.

6. Fahrzeug nach einem der vorhergehenden Ansprüche, **dadurch gekennzeichnet, dass** die Radmotoren (38a, 38b, 39a, 39b) als Radialkolbenmotoren ausgebildet sind.

7. Fahrzeug nach Anspruch 6, **dadurch gekennzeichnet, dass** die Radialkolbenmotoren ein Schluckvolumen > 280 cm³ aufweisen.

8. Fahrzeug nach einem der vorhergehenden Ansprüche, **dadurch gekennzeichnet, dass** eine Speisedruckversorgung (80) vorgesehen ist, die die Radmotoren (39a, 39b) der von der Pumpe (26) getrennten Antriebsachse (16) mit einem Speisedruck speist.

9. Verfahren zum Betrieb eines Fahrzeugs (10) mit zwei hydraulisch antreibbaren Achsen (14, 16), denen jeweils zumindest ein Radmotor (38a, 38b, 39a, 39b) zugeordnet ist, bei dem im Fall des Antriebs beider Achsen (14, 16) die
Radmotoren (38a, 38b, 39a, 39b) mit einem vorgegebenen Fördervolumen betrieben werden und im Fall des Antriebs nur einer der Achsen (14) der zumindest eine Radmotor (38a, 38b) der angetriebenen Achse (14) mit dem doppelten Fördervolumen angetrieben wird, indem die Pumpe der nicht angetriebenen Achse der angetriebenen Achse zusätzlich zu der ohnehin schon zugeordneten Pumpe zugeschaltet wird.

10. Verfahren nach Anspruch 9, **dadurch gekennzeichnet, dass** eine die Radmotoren (38a, 38b, 39a, 39b) speisende Pumpe (26) im Fall nur einer angetriebenen Achse (14) mit geringerer Drehzahl betrieben wird als im Fall des Antriebs beider Achsen (14, 16).

## Claims

1. Vehicle (10) comprising at least one driven axle (14), a hydraulic pump (26) of a first drive circuit (40) and at least one motor arranged in and fed by the first drive circuit (40), said motor driving an associated wheel (36) or an associated axle, wherein an additional drive circuit (60) having an associated further hydraulic pump is provided for additional feeding of the at least one motor, wherein a second drivable axle (16) having an associated second drive circuit (90) is provided, wherein at least one motor is arranged in and can be fed by the second drive circuit (90) and wherein either the second drive circuit (90) or the additional circuit (60) as required can be connected to the further hydraulic pump (26) via a switching device (70), **characterised in that** the at least one motor arranged in and fed by the first drive circuit (40) is designed as a wheel motor (38a, 38b).

2. Vehicle according to claim 1, **characterised in that** the switching device (70) has two switching valves (72, 74).

3. Vehicle according to one of the preceding claims, **characterised by** a dual-circuit pump connected to the first drive circuit (40) and either to the second drive circuit (90) or the additional drive circuit (60) as required.

4. Vehicle according to one of the preceding claims, **characterised in that** the power source driving the hydraulic pump (26) is designed as a motor, in particular as a combustion engine (28).

5. Vehicle according to one of the preceding claims, **characterised in that** at least two wheel motors (38a, 38b, 39a, 39b) fed in parallel are arranged at least in one of the drive circuits (40, 90).

6. Vehicle according to one of the preceding claims, **characterised in that** the wheel motors (38a, 38b, 39a, 39b) are designed as radial piston motors.

7. Vehicle according to claim 6, **characterised in that** the radial piston motors have a capacity greater than 280 cm³.

8. Vehicle according to one of the preceding claims, **characterised by** a feed pressure supply (80) feeding a feed pressure to the wheel motors (39a, 39b) of the drive axle (16) separated from the pump (26).

9. Method of operating a vehicle (10) having two hydraulically drivable axles (14, 16) with each of which at least one wheel motor (38a, 38b, 39a, 39b) is associated, wherein, when both axles (14, 16) are driven, the wheel motors (38a, 38b, 39a, 39b) are operated at a predetermined delivery rate and, when only one of the axles (14) is driven, the at least one wheel motor (38a, 38b) of the driven axle (14) is driven at twice the delivery rate in that the pump of the non-driven axle is switched to the driven axle in addition to the pump already associated therewith in any case.

10. Method according to claim 9, **characterised in that** a pump (26) feeding the wheel motors (38a, 38b, 39a, 39b) is operated at a lower speed when only one axle (14) is driven than when both axles (14, 16) are driven.

## Revendications

1. Véhicule (10) comprenant au moins un essieu entraîné (14), une pompe hydraulique (26) d'un premier circuit d'entraînement (40) et au moins un moteur agencé dans le premier circuit d'entraînement (40) et alimenté par celui-ci, qui entraîne une roue associée (36) ou un essieu associé, dans lequel un circuit d'entraînement supplémentaire (60) est prévu avec une autre pompe hydraulique associée pour l'alimentation supplémentaire d'au moins un moteur, et un second essieu entraînable (16) avec un second circuit d'entraînement (90) associé est prévu, dans lequel au moins un moteur alimentable par celui-ci est agencé dans le second circuit d'entraînement (90) et au choix le second circuit d'entraînement (90) ou le circuit supplémentaire (60) peut être relié par le biais d'un dispositif de commutation (70) à l'autre pompe hydraulique (26), **caractérisé en ce que** l'au moins un moteur agencé dans le premier circuit d'entraînement (40) et alimenté par celui-ci est réalisé comme moteur de roue (38a, 38b).

2. Véhicule selon la revendication 1, **caractérisé en ce que** le dispositif de commutation (70) présente deux soupapes de commutation (72, 74).

3. Véhicule selon l'une quelconque des revendications précédentes, **caractérisé en ce qu'**une pompe à deux circuits est prévue, laquelle est raccordée au premier circuit d'entraînement (40) et au choix au second circuit d'entraînement (90) ou circuit d'entraînement supplémentaire (60).

4. Véhicule selon l'une quelconque des revendications précédentes, **caractérisé en ce que** la source de puissance entraînant la pompe hydraulique (26) est réalisée en tant que moteur, en particulier en tant que moteur à combustion (28).

5. Véhicule selon l'une quelconque des revendications précédentes, **caractérisé en ce qu'**au moins deux moteurs de roue (38a, 38b, 39a, 39b) sont agencés au moins dans un des circuits d'entraînement (40, 90), lesquels sont alimentés parallèlement.

6. Véhicule selon l'une quelconque des revendications précédentes, **caractérisé en ce que** les moteurs de roue (38a, 38b, 39a, 39b) sont réalisés en tant que moteurs à piston radial.

7. Véhicule selon la revendication 6, **caractérisé en ce que** les moteurs à piston radial présentent un volume d'absorption > 280 cm³.

8. Véhicule selon l'une quelconque des revendications précédentes, **caractérisé en ce qu'**une alimentation en pression d'alimentation (80) est prévue, laquelle alimente les moteurs de roue (39a, 39b) de l'essieu d'entraînement (16) séparé par la pompe (26) en une pression d'alimentation.

9. Procédé de fonctionnement d'un véhicule (10) avec deux essieux entraînables par voie hydraulique (14, 16), auxquels est associé respectivement au moins un moteur de roue (38a, 38b, 39a, 39b), pour lequel en cas d'entraînement des deux essieux (14, 16) les moteurs de roue (38a, 38b, 39a, 39b) sont actionnés avec un volume de transport prescrit et en cas d'entraînement d'un seul des essieux (14) l'au moins un moteur de roue (38a, 38b) de l'essieu (14) entraîné est entraîné avec le volume de transport double, la pompe de l'essieu non entraîné de l'essieu entraîné étant mise en marche en plus de la pompe par ailleurs déjà associée.

10. Procédé selon la revendication 9, **caractérisé en ce qu'**une pompe (26) alimentant les moteurs de roue (38a, 38b, 39a, 39b) est actionnée en cas d'un seul essieu (14) entraîné avec une vitesse de rotation plus faible qu'en cas d'entraînement des deux essieux (14, 16).
